# EUROPEAN PATENT SPECIFICATION

(11) **EP 0 723 477 B1**
(45) Date of publication and mention of the grant of the patent: **26.04.2000**
(21) Application number: 94930518.9
(22) Date of filing: 06.10.1994
(51) Int. Cl.: B01J 31/00

(54) **IMPROVED SYNTHESIS OF NICKEL PHOSPHINE AND PHOSPHITE CATALYSTS**
SYNTHESE VON NICKELPHOSPHIN- UND NICKELPHOSPHITKOMPLEXEN, VERWENDBAR ALS KATALYSATOREN
SYNTHESE AMELIOREE DES CATALYSEURS A LA PHOSPHINE ET AU PHOSPHITE DE NICKEL

(30) Priority: 12.10.1993 US 135205
(43) Date of publication of application: 31.07.1996
(73) Proprietor: E.I. DU PONT DE NEMOURS AND COMPANY, Wilmington Delaware 19898 (US)
(72) Inventor: BRYNDZA, Henry, E., Avondale, PA 19311-9611 (US)
(74) Representative: Jones, Alan John
(86) International application number: US9411045
(87) International publication number: WO9511077

(56) References cited:
- EP-A- 0 589 167
- US-A- 3 903 120
- US-A- 4 556 719
- US-A- 4 827 009
- CHEMICAL ABSTRACTS, vol. 112, no. 2, 8 January 1990, Columbus, Ohio, US; abstract no. 010735, SUSLICK K A ET AL 'The effects of ultrasound on nickel and copper powders' & SOLID STATE IONICS (SSIOD3,01672738);89; VOL.32-33 (PT. I); PP.444-52, UNIV. ILLINOIS;SCH. CHEM. SCI.; URBANA; 61801; IL; USA (US)
- BULL. CHEM. SOC. JPN. (BCSJA8,00092673);94; VOL.67 (9); PP.2473-7, HIMEJI INSTITUTE OF TECHNOLOGY;FACULTY OF SCIENCE; HYOGO; 678-12; JAPAN (JP) Tai A et al 'An improved asymmetrically modified nickel catalyst prepared from ultrasonicated Raney nickel'

## Description

### FIELD OF THE INVENTION

This invention relates to an improved method for the preparation of zerovalent nickel phosphine and phosphite complexes useful for the hydrocyanation of olefins, wherein the improvement involves using ultrasonic energy in the reaction process.

U.S. Patent Nos. 3,496,215, 3,496,217 and 3,496,218 disclose the utility of nickel phosphite catalysts in the presence of promoters for the hydrocyanation of olefins, especially the hydrocyanation of pentenenitriles to adiponitrile, an important intermediate in the production of 6,6 polyamides (nylon).

U.S. Patent No. 3,903,120 discloses a process for the preparation of zerovalent nickel complexes of the group consisting of Ni(MZ₃)₄ and Ni(MZ₃)₂A wherein M is of the group consisting of P, As and Sb, Z is R or OR, R is an alkyl or aryl radical having up to 18 carbon atoms, at least one Z is OR and the R radicals of a given MZ₃ may be the same or different wherein A is a monoolefinic organic compound with no other carbon-carbon unsaturation and having from 2 to 20 carbon atoms, these catalysts having utility in the above cited hydrocyanation processes.

U.S. Patent 4,556,719 disclose a process for the preparation of complex compounds of transition metals, characterized in that transition metal salts are reacted with magnesium, to which a catalytic quantity of anthracene and/or magnesium anthracene has been added as activator, in the presence of a complexing ligand in an ultrasonic bath.

U.S. Patent No. 4,827,009 discloses catalyzing hydrosilation reactions with nickel dispersed in an inert reaction medium, where the nickel is prepared by reacting a nickel halide with an alkali metal. The hydrosilation reaction and the preparation of the nickel dispersion are conducted in the presence of ultrasound.

### SUMMARY OF THE INVENTION

This invention provides a process for the preparation of a zerovalent nickel complex of the group consisting of Ni(MZ₃)₄ and Ni(MZ₃)₂A wherein M is of the group consisting of P, As and Sb, Z is R or OR, R is an alkyl or aryl radical having up to 18 carbon atoms, at least one Z is OR and the R radicals of a given MZ₃ may be the same or different wherein A is a monoolefinic organic compound with no other carbon-carbon unsaturation and having from 2 to 20 carbon atoms,
which comprises reacting elemental nickel with a ligand MZ₃ wherein M and Z are as defined above at a temperature in the range of 0°C-150°C in the presence of at least 5 moles per million moles, based on amount of the ligand, of a catalyst compound of the formula (R'O)ₓR''_{y}MX_{z} wherein M is defined as above, R' and R'' are alkyl or aryl radicals having up to 18 carbon atoms, and may be the same or different;
wherein x and z have a value of 1-2, y is 0 or 1, the sum of x, y and z is 3; and X is a halide of the group consisting of -Cl, -Br and -I and wherein for the preparation of Ni(MZ₃)₂A there is also present a monoolefinic organic compound A,
wherein the improvement comprises applying ultrasonication to the nickel.

### DETAILED DESCRIPTION OF THE INVENTION

The present invention is an improvement upon the process described and claimed in U.S. 3,903,120, which discloses a process for the preparation of zerovalent nickel complexes. The contents of U.S. 3,903,120 are herein incorporated by reference.

Applicant's present invention provides a significant improvement to the catalyst preparation process disclosed in U.S. 3,903,120, wherein by application of sonication to the reaction process, an improvement is obtained in achieving faster reaction rates and more complete conversion of reactant to product (nickel complexes). Such improvement is useful, for example, in enhancing the efficient commercial preparation of nickel complex catalysts used in the hydrocyanation of nonconjugated olefin compounds, such as 3-pentenenitrile.

The nickel should be in the form of finely divided particles with a relatively high surface area. The surface of the particles may be "clean" or have an oxide coating.

The preferred M is phosphorous. When M is phosphorus, the phosphines and phosphites are of the form PR₃ and P(OR)₃, where R is alkyl, aryl having up to 18 carbon atoms or substituted derivatives thereof. The preferred MZ₃ is P(OR)₃ where R is tolyl.

The catalyst compounds of the invention (R'O)ₓR''_{y}MX_{z} can be preformed or preferably they are formed in situ by reaction of an initiator MX₃ with ligand MZ₃, wherein M, X and Z are as defined above and further as described in U.S. 3,903,120. The preferred initiator is PCl₃.

The process of the present invention may be carried out without added solvent if the phosphine (or phosphite) are liquid under the reaction conditions. Suitable solvents are those which are inert under the reaction conditions, including, for example, nitriles (preferably pentenenitriles) and aromatic solvents (benzene and toluene).

Preferably, as described in U.S. 3,903,120, the reaction is carried out in the presence of a promoter, typically a source of chloride. PCl₃, for example, is most preferred.

Suitable temperature will vary somewhat with the phosphine or phosphite chosen but is generally in the range of 0-150°C. Preferably, the temperature is in the range of 60-100°C. Pressure is not critical, although it may be more difficult to produce cavitation in the reaction mixture at high pressures.

The ultrasonic energy can be provided by an ultrasonic bath or by immersion of an ultrasonic horn in the reaction mixture at a intensity sufficient to produce cavitation. Alternatively, the reaction mixture or a portion of the reaction mixture may be passed through an ultrasonicated zone.

The ultrasonic energy may be applied to the reaction in the presence of both the elemental nickel and ligand together; or alternatively, the ultrasonic energy may be applied to the elemental nickel prior to the addition of ligand to the reaction mixture. Applicant has found that in both cases, an improvement is seen in the reaction rate and final catalyst conversion ratio.

The reaction can be run in batch or continuous mode, the latter offering some advantages for heat dissipation, and convenience in commercial scale catalyst preparations. Although the process of the invention is embodied in the following laboratory scale examples, Applicant notes that the invention can be practiced on an industrial scale by making the necessary engineering and design modifications which are customary in the art. Commercial scale, on line sonication can be achieved using equipment supplied by Dukane Corp., Ultrasonics Division, 2900 Dukane Drive, St. Charles, IL 60174, and Branson Sonic Power, Eagle Road, Danbury, CT 06810.

### EXAMPLES

### GENERAL PROCEDURES

All laboratory reactions were carried out in a dry box with argon purged reactants and solvents. The sonicator used was a Branson sonifier cell disruptor model 350 (Branson, Danbury, CT, U.S.A.). In laboratory runs, NMR, both proton and phosphorus, was used to measure the ratio of zerovalent nickel complex to free ligand, i.e., to measure the extent of reaction completion.

### EXAMPLE 1

### SONICATION OF NICKEL PRIOR TO ADDITION OF LIGAND

### A) Control

In a 50 ml round bottom flask there were combined 7.5 ml of recycled catalyst reaction media comprising approximatelyy 60% (by weight) tritolylphosphite, 200 to 1000 ppm phosphorus trichloride, approximately 40% (by weight) pentenenitriles, and 17.5 ml of acetonitrile. The mixture was sparged with argon for 15 minutes, and then heated to reflux under a nitrogen atmosphere for 30 minutes. 0.5 g of Ni powder was then added and the mixture was heated to reflux for 16 hours. A 5 ml sample was withdrawn, filtered through glass wool and concentrated in vacuo. Phosphorous NMR showed a complex to ligand ratio (NiL₄/Li) of 1.25:1.

### B) "Presonication" of Ni

50 g Of Ni powder was combined with 100 ml of acetonitrile and the mixture was sparged with argon. Using a Branson sonifier cell disruptor 350 with the output control set at 5, the % duty cycle at 50 and continuous pulse, the mixture was sonicated for 4 hours. Samples (2 g wet Ni) were withdrawn at 1/2 hour intervals.

### C) Test Using Ni Sonicated for 1 Hour

In a 50 ml round bottom flask there were combined 7.5 ml of the reaction media described in (A), and 10 ml of acetonitrile. The mixture was sparged with argon for 15 minutes, and then heated to reflux under a nitrogen atmosphere for 30 minutes. 0.5 g of Ni powder that had been sonicated 1 hour was then added along with 7.5 ml of acetonitrile and the mixture was heated to reflux for 16 hours. A 5 ml sample was withdrawn, filtered through glass wool and concentrated in vacuo. Phosphorous NMR showed a complex to ligand ratio (NiL₄/Li) of 1.40:1.

### D) Test Using Ni Sonicated for 4 Hours

In a 50 ml round bottom flask there were combined 7.5 ml of the reaction media described in (A), and 10 ml of acetonitrile. The mixture was sparged with argon for 15 minutes, and then heated to reflux under a nitrogen atmosphere for 30 minutes. 0.5 g of Ni powder that had been sonicated 4 hours was then added along with 7.5 ml of acetonitrile and the mixture was heated to reflux for 16 hours. A 5 ml sample was withdrawn, filtered through glass wool and concentrated in vacuo. Phosphorous NMR showed a complex to ligand ratio (NiL₄/Li) of 1.60:1.

### EXAMPLE 2

### SONICATION IN THE PRESENCE OF NICKEL AND LIGAND TOGETHER

The advantage of the present invention wherein sonication is applied to the reaction in the presence of both the ligand and nickel is demonstrated as follows.

A stock solution of PCl₃ in phosphite ligand is prepared by dissolving 1.29 g PCl₃ in 98.71 g phosphite ligand. The preparation is carried out under an inert dry nitrogen atmosphere. The phosphite ligand is composed of an 85/15 mixture of tritolylphosphite/triphenylphosphite distilled twice prior to use. Under the nitrogen atmosphere, an oven dried jacketed 200 mL three necked round bottom flask is charged with 50 mL distilled 3-pentenenitrile, 42 mL of distilled phosphite ligand, 8 mL of the PCl₃ stock solution described above and 5.0 g nickel powder obtained from INCO (International Nickel Company). An ultrasonic horn connected to a 150 watt ultrasound generator and a thermocouple is placed in the flask. Silicone oil is circulated through the jacket of the flask to control the temperature. Heat must be removed to control the sonicated reaction at 80°C. Samples are withdrawn at 30 minute intervals. The ratio of complex (NiL₄) to ligand is then determined by 31 phosphorus NMR.

The control, nonsonicated run is carried out identically except that a glass-coated magnetic stir bar is used for agitation (in the absence of ultrasonic agitation) and the oil circulated through the jacket on the flask is used to supply rather than to remove heat to control the temperature at 80°C.

Comparison of the two runs shows an increase in rate of complex formation and an increase in final complex concentration for the sonicated run versus the non-sonicated control run.

## Claims

1. A process for the preparation of a zerovalent nickel complex of the group consisting of Ni(MZ₃)₄ and Ni(MZ₃)₂A wherein M is of the group consisting of P, As and Sb, Z is R or OR, R is an alkyl or aryl radical having up to 18 carbon atoms, at least one Z is OR and the R radicals of a given MZ₃ may be the same or different wherein A is a monoolefinic organic compound with no other carbon-carbon unsaturation and having from 2 to 20 carbon atoms,
which comprises reacting elemental nickel with a ligand MZ₃ wherein M and Z are as defined above at a temperature in the range of 0°C-150°C in the presence of at least 5 moles per million moles, based on amount of the ligand, of a catalyst compound of the formula (R'O)ₓR''_{y}MX_{z} wherein M is defined as above, R' and R'' are alkyl or aryl radicals having up to 18 carbon atoms, and may be the same or different;
wherein x und z have a value of 1-2, y is 0 or 1, the sum of x, y and z is 3; and X is a halide of the group consisting of -CL, -Br and -I and wherein for the preparation of Ni(MZ₃)₂A there is also present a monoolefinic organic compound A,
wherein the improvement comprises applying ultrasonication to the nickel.

2. The process of Claim 1 wherein the ultra-sonication is applied to the elemental nickel prior to the addition of the elemental nickel to the ligand and catalyst compound.

3. The process of Claim 1 wherein the ultra-sonication is applied to the nickel subsequent to the addition of the elemental nickel to the ligand and catalyst compound.

4. The process of Claim 1 wherein M is P.

5. The process of Claim 1 wherein R is phenyl or tolyl.

6. The process of Claim 1 wherein A is 3-pentenenitrile.

7. The process of Claim 1 wherein the temperature is 60°C to 100°C.

8. The process of Claim 1 wherein X is Cl.

9. The process of Claim 1 wherein the catalyst compound (R'O)ₓR''_{y}MZ_{z} is prepared in situ by the reaction of MX₃ with MZ₃.

10. The process of Claim 9 wherein MX₃ is PCl₃.

## Patentansprüche

1. Verfahren für die Herstellung eines nullwertigen Nickel-Komplexes der Gruppe, bestehend aus Ni(MZ₃)₄ und Ni(MZ₃)₂A, wobei M aus der Gruppe, bestehend aus P, As und Sb ist, Z ist R oder OR, R ist ein Alkyl- oder Arylradikal mit bis zu 18 Kohlenstoffatomen, mindestens ein Z ist OR, und die R Radikale eines gegebenen MZ₃ können gleich oder unterschiedlich sein, wobei A eine monoolefinische organische Verbindung mit keiner anderen Kohlenstoff-Kohlenstoff-Nichtsättigung ist und 2 bis 20 Kohlenstoffatome hat, welches umfaßt
Umsetzen von elementarem Nickel mit einem Liganden MZ₃, wobei M und Z, wie zuvor angegeben, definiert sind, bei einer Temperatur im Bereich von 0°C - 150°C in der Anwesenheit von mindestens 5 Molen pro Million Mole, basierend auf der Ligandenmenge, einer Katalysatorverbindung der Formel (R'O)ₓR''_{y}MX_{z}, wobei M wie zuvor angegeben definiert ist, R' und R'' sind Alkyl- oder Arylradikale mit bis zu 18 Kohlenstoffatomen und können gleich oder unterschiedlich sein;
wobei x und z einen Wert von 1-2 haben, y ist 0 oder 1, die Summe von x, y und z ist 3; und X ist ein Halogenid der Gruppe bestehend aus -Cl, -Br und -I, und wobei für die Herstellung von Ni(MZ₃)₂A auch eine monoolefinische organische Verbindung A vorhanden ist,
wobei die verbesserung das Anwenden von Ultrabeschallung auf das Nickel umfaßt.

2. Verfahren nach Anspruch 1, wobei die Ultrabeschallung auf das elementare Nickel vor der Zugabe des elementaren Nickels zu dem Liganden und Katalysatorverbindung angewendet wird.

3. Verfahren nach Anspruch 1, wobei die Ultrabeschallung auf das Nickel nach der Zugabe des elementaren Nickels zu dem Liganden und Katalysatorverbindung angewendet wird.

4. Verfahren nach Anspruch 1, wobei M P ist.

5. Verfahren nach Anspruch 1, wobei R Phenyl oder Tolyl ist.

6. Verfahren nach Anspruch 1, wobei A 3-Pentennitril ist.

7. Verfahren nach Anspruch 1, wobei die Temperatur 60°C bis 100°C beträgt.

8. Verfahren nach Anspruch 1, wobei X Cl ist.

9. Verfahren nach Anspruch 1, wobei die Katalysatorverbindung (R'O)ₓR''_{y}MZ_{z} in situ durch die Reaktion von MX₃ mit MZ₃ hergestellt wird.

10. Verfahren nach Anspruch 9, wobei MX₃ PCl₃ ist.

## Revendications

1. Procédé pour la préparation d'un complexe de nickel de valence zéro du groupe constitué par Ni(MZ₃)₄ et Ni(MZ₃)₂A où M est du groupe constitué par P, As et Sb, Z est R ou OR, R est un radical alkyle ou aryle ayant jusqu'à 18 atomes de carbone, au moins un Z est OR et les radicaux R d'un MZ₃ donné peuvent être identiques ou différents, où A est un composé organique monooléfinique sans autre insaturation carbone-carbone et ayant de 2 à 20 atomes de carbone,
qui comprend la réaction de nickel élémentaire avec un ligand MZ₃ où M et Z sont tels que définis ci-dessus, à une température dans la gamme de 0°C à 150°C, en présence d'au moins 5 moles par million de moles, par rapport à la quantité du ligand, d'un composé catalytique de formule (R'O)ₓR''_{y}MX_{z} où M est défini comme ci-dessus, R' et R'' sont des radicaux alkyles ou aryles ayant jusqu'à 18 atomes de carbone, et peuvent être identiques ou différents;
dans laquelle x et z ont une valeur de 1 à 2, y est 0 ou 1, la somme de x, y et z est 3; et X est un halogénure du groupe constitué par -Cl, -Br et -I et dans laquelle, pour la préparation de Ni(MZ₃)₂A, un composé organique monooléfinique A est aussi présent,
dans lequel l'amélioration comprend l'application d'une sonication aux ultrasons au nickel.

2. Procédé selon la revendication 1, dans lequel la sonication aux ultrasons est appliquée au nickel élémentaire avant l'addition du nickel élémentaire au ligand et au composé catalytique.

3. Procédé selon la revendication 1, dans lequel la sonication aux ultrasons est appliquée au nickel après l'addition du nickel élémentaire au ligand et au composé catalytique.

4. Procédé selon la revendication 1, dans lequel M est P.

5. Procédé selon la revendication 1, dans lequel R est un groupe phényle ou tolyle.

6. Procédé selon la revendication 1, dans lequel A est du 3-pentènenitrile.

7. Procédé selon la revendication 1, dans lequel la température est de 60°C à 100°C.

8. Procédé selon la revendication 1, dans lequel X est Cl.

9. Procédé selon la revendication 1, dans lequel le composé catalytique (R'O)ₓR''_{y}MZ_{z} est préparé in situ par la réaction de MX₃ avec MZ₃.

10. Procédé selon la revendication 9, dans lequel MX₃ est PCl₃.
